(19) Europäisches Patentamt / European Patent Office / Office européen des brevets

(11) **EP 3 938 373 B1**

(12) **EUROPÄISCHE PATENTSCHRIFT**

(45) Veröffentlichungstag und Bekanntmachung des Hinweises auf die Patenterteilung:
**03.05.2023 Patentblatt 2023/18**

(21) Anmeldenummer: **19711067.9**

(22) Anmeldetag: **12.03.2019**

(51) Internationale Patentklassifikation (IPC):
**C07F 7/16** (2006.01)  **B01J 8/18** (2006.01)
**B01J 8/32** (2006.01)

(52) Gemeinsame Patentklassifikation (CPC):
**C07F 7/16; B01J 8/1809; B01J 8/1827; B01J 8/32;**
B01J 2208/00539; B01J 2208/0061;
B01J 2208/025; B01J 2219/00006

(86) Internationale Anmeldenummer:
**PCT/EP2019/056164**

(87) Internationale Veröffentlichungsnummer:
**WO 2020/182299 (17.09.2020 Gazette 2020/38)**

(54) **VERFAHREN ZUR HERSTELLUNG VON ORGANOCHLORSILANEN**

METHOD FOR PREPARING ORGANOCHLOROSILANES

PROCÉDÉ POUR OBTENIR DES SILANES ORGANOCHLORÉS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**19.01.2022 Patentblatt 2022/03**

(73) Patentinhaber: **Wacker Chemie AG**
**81737 München (DE)**

(72) Erfinder:
• **RIMBÖCK, Karl-Heinz**
**84431 Heldenstein (DE)**
• **MÜLLER, Michael**
**84489 Burghausen (DE)**
• **SOFINA, Natalia**
**84489 Burghausen (DE)**

(74) Vertreter: **Belz, Ferdinand et al**
**Wacker Chemie AG**
**Hanns-Seidel-Platz 4**
**81737 München (DE)**

(56) Entgegenhaltungen:
**WO-A1-2017/178080**

• M Müller ET AL: "Advanced Modeling of Mueller-Rochow Synthesis", Silicon for the chemical and solar industry XIII, 1. Januar 2016 (2016-01-01), Seiten 1-390, XP055631939, Gefunden im Internet: URL:https://www.ntnu.no/trykk/publikasjoner/Silicon%20for%20the%20chemical%20and%20s olar%20industry%20XIII/HTML/files/assets/c ommon/downloads/publication.pdf [gefunden am 2019-10-15]
• FENG ZHANG ET AL: "Effect of Gas Distributor on Hydrodynamics and the Rochow Reaction in a Fluidized Bed Membrane Reactor", INDUSTRIAL & ENGINEERING CHEMISTRY RESEARCH, Bd. 55, Nr. 40, 19. September 2016 (2016-09-19), Seiten 10600-10608, XP055324939, ISSN: 0888-5885, DOI: 10.1021/acs.iecr.6b02028
• KUZ'MIN N G ET AL: "STUDY OF HEAT TRANSFER IN A FLUIDIZED BED OF SILICON-COPPER ALLOY IN A MODEL OF AN INDUSTRIAL REACTOR FOR THE SYNTHESIS OF ORGANOCHLOROSILANES", SOVIET CHEMICAL INDUSTRY, MCELROY, AUSTIN, TX, US, Bd. 14, Nr. 5, 1. Januar 1982 (1982-01-01) , Seiten 595-601, XP008182487, ISSN: 0038-5344
• PAN ZHANG ET AL: "Effect of Bed Characters on the Direct Synthesis of Dimethyldichlorosilane in Fluidized Bed Reactor", SCIENTIFIC REPORTS, Bd. 5, 6. März 2015 (2015-03-06), Seite 8827, XP055324940, DOI: 10.1038/srep08827

- P Bangert: "Optimization of the Müller-Rochow Synthesis of Silanes - Preprint", Optimization for Industrial Problems, 1. Januar 2010 (2010-01-01), Seiten 1-8, XP055632565, Gefunden im Internet: URL:http://www.algorithmica-technologies.com/pdfs/cases/Optimization_Mueller-Rochow_ Synthesis.pdf [gefunden am 2019-10-16]
- KALCHAUER WILFRIED ET AL: "Müller-Rochow Synthesis: The Direct Process to Methylchlorosilanes", HANDBOOK OF HETEROGENEOUS CATALYSIS, PART 12. INORGANIC REACTIONS, WILEY-VCH VERLAG GMBH & CO. KGAA, PAGE(S) 2635 - 2647 , 1. Januar 2008 (2008-01-01), XP009516630, ISBN: 978-3-527-61004-4 Gefunden im Internet: URL:https://onlinelibrary.wiley.com/doi/pd f/10.1002/9783527610044.hetcat0134 [gefunden am 2008-03-15]

**Beschreibung**

Die Erfindung betrifft ein Verfahren zur Herstellung von Organochlorsilanen in einem Wirbelschichtreaktor durch Umsetzung von einem Methylchlorid enthaltenden Reaktionsgas mit einer partikulären Kontaktmasse, enthaltend Silicium und einen Katalysator, wobei die Organochlorsilane die allgemeine Formel $(CH_3)_nHSiCl_{4-n-m}$ mit n = 1 bis 3 und m = 0 oder 1 aufweisen. Das Design des Wirbelschichtreaktors wird durch eine Kennzahl K1, die Beschaffenheit der Kontaktmasse durch eine Kennzahl K2 und die Reaktionsbedingungen durch eine Kennzahl K3 beschrieben, wobei K1 einen Wert von 1 bis 20, K2 einen Wert von 0,001 bis 200 und K3 einen Wert von 0,5 bis 10.000 hat.

Der Markt für Siliciumprodukte stellt ein sich schnell veränderndes Umfeld für die darin tätigen Unternehmen dar. Eine sich verändernde Nachfrage, steigende Qualitätsanforderungen, schwankende Preise für Rohstoffe und Energie sowie strengere Regulierungen verlangen ein hohes Maß an operativer Agilität und Effizienz, um größtmögliche Wirtschaftlichkeit zu erreichen.

Eine besonders wichtige Produktgruppe ist hierbei unter der technischen Bezeichnung Silicone zusammengefasst: die Stoffklasse der Polysiloxane. Die industrielle Herstellung von Siliconen erfolgt über die Hydrolyse und anschließende Kondensation von Organochlorsilanen. In der technischen Siliconchemie sind Methylsiloxane dominierend, weswegen der Synthese der entsprechenden Ausgangsstoffe, der Methylchlorsilane, die größte wirtschaftliche Bedeutung zukommt. Letztere werden in der Industrie fast ausschließlich über die sogenannte Müller-Rochow-Direktsynthese (MRDS) produziert.

Bei der MRDS werden in der Regel eine organische Verbindung mit an Kohlenstoff gebundenem Chlor, meist Methylchlorid (MeCl), und Silicium in Gegenwart eines Katalysators und ggf. geeigneten Promotoren zu Organochlorsilanen, insbesondere Methylchlorsilanen (MCS), gemäß Reaktionsgleichung (1), umgesetzt.

(1)     $Si + CH_3Cl$ ---(Katalysator, ggf. Promotor) > $(CH_3)_nH_mSiCl_{4-n-m}$ + Nebenprodukte (n = 1-3, m = 0, 1)

Typische Haupt- und Nebenprodukte der MRDS und deren üblicherweise auftretender Anteil sind in Tabelle 1 zusammengefasst. Ferner können Verunreinigungen wie Kohlenwasserstoffe und Metallchloride Bestandteil der Nebenprodukte sein. Um hochreine Organochlorsilane zu erzeugen, erfolgt daher anschließend gemeinhin eine Destillation.

Tabelle 1

| Silan | Formel | Typischer Anteil [Gew. -%] |
|---|---|---|
| Dimethyldichlorsilan | $(CH_3)_2SiCl_2$ | 75-94 |
| Methyltrichlorsilan | $(CH_3)SiCl_3$ | 3-15 |
| Trimethylchlorsilan | $(CH_3)_3SiCl$ | 2-5 |
| Methyldichlorsilan | $(CH_3)HSiCl_2$ | 0,5-4 |
| Dimethylchlorsilan | $(CH_3)_2HSiCl$ | 0,1-0,5 |
| Tetrachlorsilan | $SiCl_4$ | < 0,1 |
| Tetramethylsilan | $(CH_3)_4Si$ | 0,1-1 |
| Trichlorsilan | $HSiCl_3$ | < 0,1 |
| Disilane | $(CH_3)_xSi_2Cl_{6-x}$ | 2-8 |

Neben einer möglichst hohen Produktivität (Menge an gebildeten Organochlorsilanen pro Zeiteinheit und Reaktionsvolumen) und einer möglichst hohen Selektivität - insbesondere bezogen auf das grundsätzlich wichtigste Zielprodukt Dimethyldichlorsilan (DMDCS, $(CH_3)_2SiCl_2$) - wird dabei auch eine möglichst hohe Siliciumnutzung, verbunden mit einem sicheren und gleichzeitig flexiblen Betrieb der gesamten Anlage gefordert. DMDCS wird beispielsweise für die Herstellung von linearen und cyclischen Siloxanen benötigt, die ihrerseits weiter polymerisiert werden können, um ein breites Spektrum von Polydimethylsiloxanen herzustellen.

Die MRDS kann diskontinuierlich oder kontinuierlich durchgeführt werden. Bei beiden Varianten erfolgt die großtechnische Herstellung der Organochlorsilane grundsätzlich über eine Wirbelbettreaktion, wobei das Reaktionsgas, enthaltend eine organische Verbindung mit an Kohlenstoff gebundenem Chlor, gleichzeitig als Fluidisierungsmedium dient. Bei der Wirbelbettreaktion der MRDS handelt es sich um einen komplexen Prozess, an dem viele unterschiedliche Einflussgrößen und Fachgebiete aufeinandertreffen.

Generell hängt die operative Performance (bspw. ausgedrückt durch DMDCS-Selektivität, Produktivität, geringe Bildung hochsiedender Nebenprodukte, Nebensilan-Selektivität und/oder -Verhältnis (Nebensilane sind alle Silane, die neben DMDCS bei der MRDS entstehen)) der MRDS entscheidend vom Reaktordesign, von der Arbeitskörnung bzw.

der Kontaktmasse sowie von den eingestellten Reaktionsparametern ab. Ferner ist es insbesondere für eine kontinuierliche Prozessführung erforderlich, die Eduktkomponenten Silicium und MeCl sowie die Katalysatoren und ggf. Promotoren unter den Reaktionsbedingungen in den Reaktor einzubringen, was mit einem erheblichen technischen Aufwand verbunden ist. Im Regelfall in gleichem Maße aufwendig sind diskontinuierliche MRDS-Prozesse. Daher ist es wichtig, eine möglichst hohe Produktivität - Menge an gebildeten Organochlorsilanen pro Zeiteinheit und Reaktionsvolumen - und eine möglichst hohe Selektivität bezogen auf das gewünschte Zielprodukt (üblicherweise DMDCS) zu realisieren.

Grundsätzlich sind die bekannten Verfahren aufwendig und energieintensiv. Die erforderliche Energiezufuhr, die in der Regel elektrisch erfolgt, stellt einen erheblichen Kostenfaktor dar. Die operative Performance (bspw. ausgedrückt durch die TCS-selektivitätsgewichtete Produktivität, die Entstehung wenig hochsiedender Nebenprodukte) der NTK im Wirbelschichtreaktor hängt entscheidend von den einstellbaren Reaktionsparametern ab. Ferner ist es für eine kontinuierliche Prozessführung erforderlich, die Eduktkomponenten Silicium, STC und Wasserstoff unter den Reaktionsbedingungen in den Reaktor einzubringen, was mit einem erheblichen technischen Aufwand verbunden ist. Vor diesem Hintergrund ist es wichtig, eine möglichst hohe Produktivität - Menge an gebildeten Chlorsilanen pro Zeiteinheit und Reaktionsvolumen - und eine möglichst hohe Selektivität bezogen auf das gewünschte Zielprodukt (üblicherweise TCS) zu realisieren (TCS-selektivitätsgewichtete Produktivität).

Die Herstellung von Organochlorsilanen durch die MRDS ist ein dynamischer Prozess. Für eine möglichst effiziente Durchführung und eine stetige Optimierung ist ein Verständnis der zugrundeliegenden Dynamiken erforderlich. Dafür können zeitlich hochaufgelöste Methoden zum Prozess-Monitoring herangezogen werden.

Es ist bekannt, die Zusammensetzung in einer Produktmischung der MRDS mit hohem Personalaufwand im Labor durch Analyse von entnommenen Proben zu bestimmen (off-/at-line Messung). Diese findet jedoch immer zeitverzögert statt und liefert damit im besten Fall einen punktuellen, retrospektiven Ausschnitt eines diskreten Betriebszustandes eines Wirbelschichtreaktors. Werden aber beispielsweise Produktgasströme mehrerer Reaktoren auf eine Kondensationsstrecke geleitet und wird lediglich eine Probe dieser Kondensatmischung entnommen, lassen sich auf Basis des Analyseergebnisses keine konkreten Rückschlüsse auf die Betriebszustände der einzelnen Reaktoren ziehen.

Um in höherer zeitlicher Auflösung die Zusammensetzung einer Produktmischung der MRDS messen zu können (bevorzugt an jedem Reaktor separat), können Prozessanalysatoren im Gas- und/oder Kondensatstrom, beispielsweise Gaschromatograph, angewandt werden (on-/in-line und/oder nicht-invasive Messung). Im Allgemeinen nachteilig hierbei ist die beschränkte Anzahl einsetzbarer Geräte, aufgrund der hohen mechanischen Beanspruchung (Abrasion) und der aggressiven chemischen Umgebung. Ein weiterer Kostenfaktor sind die generell hohen Beschaffungs- und Wartungskosten.

Um diskrete Betriebszustände von MRDS-Reaktoren zu identifizieren, kann grundsätzlich auf verschiedene prozessanalytische Methoden zurückgegriffen werden, die wie folgt kategorisiert werden können (W.-D. Hergeth, On-Line Monitoring of Chemical Reactions: Ullmann's Encyclopedia of Industrial Chemistry, Wiley: Weinheim, Germany 2006).

| Kategorie | Probennahme | Probentransport | Analyse |
|---|---|---|---|
| off-line | manuell | zu entferntem Labor | automatisiert/ manuell |
| at-line | diskontinuierlich manuell | zu Analysegerät vor Ort | automatisiert/ manuell |
| on-line | automatisiert | integriert | automatisiert |
| in-line | integriert | kein Transport | automatisiert |
| noninvasiv | kein Kontakt | kein Transport | automatisiert |

Müller et *al.* beschreiben ein Simulationsmodell der MRDS, das die Einflüsse der Fluiddynamik sowie konstruktive Aspekte kombiniert, beispielsweise die Auswirkungen von Betriebsparametern, Korngrößen oder Wirbelschichteinbauten. Zur Validierung des Modells wurden umfangreiche experimentelle Untersuchungen an Pilotanlagen durchgeführt (M. Müller et al.: "Advanced Modeling of Mueller-Rochow Synthesis", Silicon for the chemical and solar industry XIII, Jan 2016, 157-169)

Von F. Zhang *et al.* wurde das Syamlal-O'Brien-Widerstandsmodell optimiert, um eine Vorhersage des Feststoffvolumenanteils bei der MRDS zu ermöglichen. Die Einflüsse des Öffnungsverhältnisses und der Anzahl der Löcher des Gasverteilers auf die Hydrodynamik wurde mittels Strömungssimulationen untersucht (F. Zhang et al.: "Effect of Gas Distributor on Hydrodynamics and the Rochow Reaction in a Fluidized Bed Membrane Reactor", Industrial & Engineering Chemistry Research, Bd. 55, Nr. 40, Sept 2016, 10600-10608).

N. G. Kuz'min *et al.* haben die Wärmeübertragung in einer Wirbelschicht aus einer Si-Cu-Legierung anhand eines Modells eines Industriereaktors für die Synthese von Organochlorsilanen untersucht (N. G. Kuz'min et al.: "Study of Heat Transfer in a Fluidized Bed of Silicon-Copper Alloy in a Model of an Industrial Reactor for the Synthesis of Organochlorosilanes", Soviet Chemical Industry, Mcelroy, Austin, TX, US, Bd. 14, Nr. 5, Jan 1982, 595-601).

P. Zhang *et al.* haben die Auswirkungen von Wirbelbettcharakteristika wie Gasgeschwindigkeiten, Betttemperatur, Betthöhe und Partikelgröße auf die MRDS in einem 3D-Modell numerisch untersucht (P. Zhang et al.: "Effect of Bed Characters on the Direct Synthesis of Dimethyldichiorosiiane in Fluidized Bed Reactor", Scientific Reports, Bd. 5, Mär 2015, 8827) .

P. Bangert beschreibt die Erstellung eines adaptiven mathematischen Modells der MRDS auf Basis des maschinellen Lernens (P. Bangert: "Optimization of the Müller-Rochow Synthesis of Silanes - Preprint", Optimization for Industrial Problems, Jan 2010, 1-8).

W. Kalchauer et *al.* fassen alle Aspekte der MRDS in einem Übersichtsartikel zusammen ("Mueller-Rochow Synthesis: The Direct Process to Methylchlorosilanes", Handbook of Heterogeneous Catalysis, Pt. 12. Inorganic Reactions, Wiley-VCH Verlag GmbH & CO. KGAA, Januar 2008, 2635-2647).

Die Nachteile von Prozessanalysatoren können durch eine modellbasierte Methodik auf Basis sogenannter Softsensoren (virtuelle Sensoren) umgangen werden. Softsensoren greifen auf kontinuierlich erhobene Messdaten von Betriebsparametern zurück, die zum Betreiben des Prozesses essentiell sind (z.B. Temperaturen, Drücke, Volumenströme, Füllstände, Leistungen, Massenströme, Ventilstellungen). So lassen sich beispielsweise Konzentrationen an Haupt- und Nebenprodukten vorhersagen.

Softsensoren basieren auf mathematischen Gleichungen und sind Abhängigkeitssimulationen von stellvertretenden Messgrößen zu einer Zielgröße. Mit anderen Worten, Softsensoren bilden Abhängigkeiten von korrelierenden Messgrößen ab und führen zu einem Zielparameter. Der Zielparameter wird also nicht direkt gemessen, sondern anhand von mit diesem korrelierenden Messgrößen bestimmt. Übertragen auf die MRDS bedeutet dies, dass beispielsweise der DMDCS-Gehalt oder DMDCS-Selektivität nicht mit realen Messsensoren (z.B. Prozessgaschromatograph) bestimmt wird, sondern über Zusammenhänge zwischen Betriebsparametern berechnet wird.

Die Erstellung mathematischer Gleichungen für Softsensoren kann durch vollempirische (z.B. basierend auf einem abgewandelten Power-Law-Modell), durch teilempirische (z.B. basierend auf kinetischen Gleichungen zur Beschreibung einer Reaktionsgeschwindigkeit) oder durch fundamentale (z.B. basierend auf Grundgleichungen der Strömungsmechanik und Kinetik) Modellierung erfolgen. Die mathematischen Gleichungen können mit Hilfe von Prozesssimulationsprogrammen (z.B. OpenFOAM, ANSYS oder Barracuda) oder Regressionsprogrammen (z.B. MATLAB, Excel VBA oder Maple) abgeleitet werden.

Die Aufgabe der vorliegenden Erfindung bestand darin, die Wirtschaftlichkeit der MRDS zu verbessern.

Diese Aufgabe wird gelöst durch ein Verfahren zur Herstellung von Organochlorsilanen in einem Wirbelschichtreaktor durch Umsetzung von einem MeCl enthaltenden Reaktionsgas mit einer partikulären Kontaktmasse, enthaltend Silicium und einen Katalysator, wobei die Organochlorsilane die allgemeine Formel $(CH_3)_n HSiCl_{4-n-m}$ mit n = 1 bis 3 und m = 0 oder 1 aufweisen.

Das Reaktordesign wird dabei beschrieben durch eine dimensionslose Kennzahl K1, wobei

$$K1 = \varphi \cdot \frac{V_{Reaktor,eff}}{A_{ges,gekühlt} \cdot d_{hyd}}, \text{ mit} \qquad \text{(Gleichung 1)}$$

$\varphi$ = Füllgrad des Reaktors,
$V_{Reaktor,eff}$ = effektives Volumen des Reaktorinnenraums [m$^3$],
$A_{ges,gekühlt}$ = Summe gekühlter Oberflächen im Reaktor [m$^2$] und
$d_{hyd}$ = hydraulischer Reaktordurchmesser[m].

Die Beschaffenheit der Kontaktmasse wird beschrieben durch eine dimensionslose Kennzahl K2, wobei

$$K2 = R_{Si} \cdot \frac{B_{AK} \cdot \delta_{rel}}{d_{32}}, \text{ mit} \qquad \text{(Gleichung 4)}$$

$B_{AK}$ = Breite der Partikelgrößenverteilung der Kontaktmasse [$\mu$m],
$d_{32}$ = Partikel-Sauterdurchmesser [$\mu$m],
$R_{si}$ = Reinheitsgrad des Siliciums (0,75 bis 0,99999) und
$\delta_{rel}$ = relative Katalysatorverteilung in der Kontaktmasse.

Die Reaktionsbedingungen sind beschrieben durch eine dimensionslose Kennzahl K3, wobei

$$K3 = \frac{u_L}{v_F \cdot 10^6} \cdot \frac{p_{diff}}{g} \cdot \frac{1}{\rho_F}, \text{ mit} \qquad \text{(Gleichung 7)}$$

$u_L$ = Gasleerrohrgeschwindigkeit [m/s],
$v_F$ = kinematische Viskosität des Fluids (gasförmiges Reaktionsgemisch im Reaktorinnenraum) [m²/s],
$\rho_F$ = Fluiddichte [kg/m³],
$p_{diff}$ = Druckverlust über die Wirbelschicht [kg/m*s²] und
$g$ = Erdbeschleunigung [m/s²].

K1 wird bei dem Verfahren ein Wert von 1 bis 30, K2 ein Wert von 0,0005 bis 2 und K3 ein Wert von 0,2 bis 3.000 vorgegeben. Innerhalb dieser Bereiche ist die Produktivität des Verfahrens besonders hoch.

Durch den Einsatz von physischen und virtuellen Methoden zum Prozessmonitoring konnten neue Zusammenhänge identifiziert werden, die es ermöglichen, die MRDS durch K1, K2 und K3 so zu beschreiben, dass sich das Verfahren durch Wahl bestimmter Parametereinstellungen und Kombinationen daraus besonders wirtschaftlich betreiben lässt. Das erfindungsgemäße Verfahren ermöglicht eine integrierte, prädiktive Prozesssteuerung im Sinne einer "Advanced Process Control (APC)". Wird die MRDS, insbesondere durch Prozessregelungssysteme (bevorzugt APC-Regler), in den erfindungsgemäßen Bereichen für K1, K2 und K3 durchgeführt, ergibt sich eine größtmögliche wirtschaftliche Effizienz. In einem Verbund zur Herstellung von Siliciumprodukten, insbesondere Siliconen, kann so der gesamte Produktionsablauf optimiert und Herstellungskosten gesenkt werden.

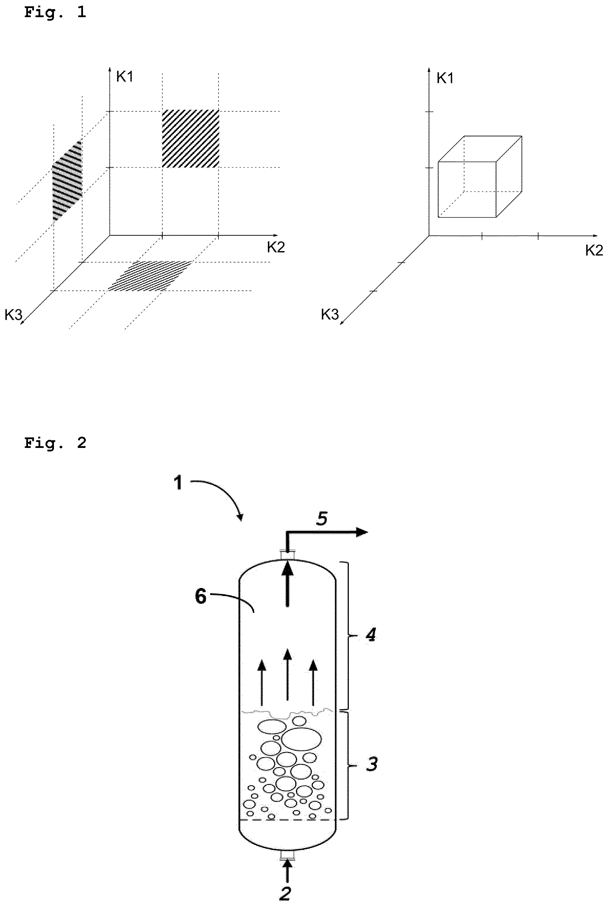

Die Bereiche für die Kennzahlen K1, K2 und K3 spannen, eingetragen in ein kartesisches Koordinatensystem, einen dreidimensionalen Raum auf, der einen besonders wirtschaftlichen Betriebsbereich für die MRDS darstellt. In der Figur 1 ist ein solcher Betriebsbereich schematisch dargestellt. Insbesondere wird durch das erfindungsgemäße Verfahren auch die Auslegung neuer Wirbelschichtreaktoren für die MRDS erheblich vereinfacht.

Durch Softsensoren können zudem Performance-Parameter wie bspw. die DMDS-Selektivität als Funktion von K1, K2 und K3 abgebildet werden. Die dadurch in hoher zeitlicher Auflösung ermittelten Performance-Daten können als zu regelnde Größe an eine Prozessregelung, insbesondere modellprädiktive Regelung, weitergegeben werden. Auf diese Weise kann der Prozess wirtschaftlich optimiert betrieben werden.

Gemäß einer bevorzugten Ausführung des Verfahrens weist K1 einen Wert von 1,2 bis 25, bevorzugt von 1,5 bis 20, auf. K2 hat vorzugsweise einen Wert von 0,001 bis 1,75, bevorzugt von 0,001 bis 1,2.

K3 weist vorzugsweise einen Wert von 1 bis 2.800, bevorzugt von 10 bis 2.500, auf.

Die Figur 2 zeigt schematisch einen Wirbelschichtreaktor 1 mit einem Reaktorinnenraum 6 zur Durchführung des Verfahrens. Das Reaktionsgas 2 wird vorzugsweise von unten und gegebenenfalls von der Seite (z.B. tangential oder orthogonal zum Gasstrom von unten) in die partikuläre Kontaktmasse eingeblasen, wodurch die Partikel der Kontaktmasse fluidisiert werden und eine Wirbelschicht 3 bilden. In der Regel wird zum Starten der Reaktion mittels einer außerhalb des Reaktors angeordneten Heizvorrichtung (nicht dargestellt) die Wirbelschicht 3 beheizt. Während des kontinuierlichen Betriebs ist üblicherweise kein Heizen erforderlich. Ein Teil der Partikel wird mit der Gasströmung aus der Wirbelschicht 3 in den Freiraum 4 oberhalb der Wirbelschicht 3 transportiert. Der Freiraum 4 ist durch eine sehr geringe Feststoffdichte gekennzeichnet, wobei diese in Richtung Reaktoraustritt abnimmt. Der Partikelanteil, der mit der Gasströmung den Reaktor verlässt, wird als Partikelaustrag 5 bezeichnet. Beispiele von Wirbelschichtreaktoren sind in der WO 2017/178080 A1 und unter B.Kanner, K.M. Lewis, "Commercial Production of Silanes by the Direct Synthesis"; Studies in Organic Chemistry - Catalyzed Direct Reactions of Silicion, Elsevier Science Publishers B.V.,1993, 49, 1-46 beschrieben.

## K1 - Das Füllgrad-gewichtete Reaktordesign

Die Kennzahl K1 setzt über die Gleichung 1 Parameter der Reaktorgeometrie, nämlich das effektive Volumen des Reaktorinnenraums $V_{Reaktor,eff}$, die Summe der gekühlten Oberflächen im Reaktorinnenraum $A_{ges,gekühlt}$ sowie den hydraulischen Durchmesser $d_{hyd}$ mit der Wirbelschicht, ausgedrückt durch den dimensionslosen Füllgrad $\varphi$, in Beziehung.

$V_{Reaktor,eff}$ entspricht dem gesamten Volumen des Reaktorinnenraums abzüglich aller Einbauten. $V_{Reaktor,eff}$ beträgt 1,5 bis 2.400 m³, bevorzugt 5 bis 1.200 m³, besonders bevorzugt 12 bis 810 m³.

Untersuchungen zur Fluiddynamik in Wirbelschichtreaktoren haben ergeben, dass die Geometrie des Innenraums des Wirbelschichtreaktors maßgeblich die Fluiddynamik und damit auch die Produktivität beeinflussen kann. Unter Innenraum soll dabei insbesondere der Bereich verstanden werden, der mit dem Reaktionsgas und/oder den Partikeln der Kontaktmasse in Berührung kommen kann (also insbesondere sowohl der Freiraum als auch der Bereich, in dem sich die Wirbelschicht bildet). Die Geometrie des Innenraums wird neben allgemeinen konstruktiven Merkmalen wie Höhe, Breite, Form (z.B. Zylinder oder Konus) auch durch sich im Innenraum befindliche Einbauten bestimmt. Bei den Einbauten kann es sich insbesondere um Wärmetauschereinheiten, Versteifungsebenen, Zuführungen (Leitungen) zum Einbringen des Reaktionsgases und Vorrichtungen zur Verteilung des Reaktionsgases (z.B. Gasverteilerplatten) handeln.

Die Summe der gekühlten Oberflächen im Reaktorinnenraum $A_{ges,gekühlt}$ gibt an, wieviel Fläche zum Wärmeaustausch genutzt werden kann. Beispielsweise setzt sich $A_{ges,gekühlt}$ aus den Oberflächen eines Kühlregisters (bestehend aus einzelnen Lanzen, U-Rohren o.Ä.) sowie einer Mantelkühlung zusammen.

Der hydraulische Durchmesser $d_{hyd}$ des Wirbelschichtreaktors ist eine ingenieurtechnische Kennzahl, mit der sich strömungsmechanische Reibungs- und Oberflächeneffekte von Einbauten, Kanälen oder anderen Geometrien beschreiben lassen, indem diese auf einen äquivalenten Durchmesser zurückgeführt werden. $d_{hyd}$ berechnet sich nach Gleichung 2.

$$d_{hyd} = 4 \cdot \frac{A_{q,frei}}{U_{ges,benetzt}}, \text{ mit} \qquad \text{(Gleichung 2)}$$

$A_{q,frei}$ = freier Strömungsquerschnitt im Innenraum [m$^2$] und
$U_{ges,benetzt}$ = benetzter Umfang aller Einbauten [m] .

Beim freien Strömungsquerschnitt handelt es sich um den Querschnitt des Teils des Reaktors (ohne Einbauten) in der sich die Wirbelschicht ausbildet.

Der hydraulische Anlagendurchmesser $d_{hyd}$ beträgt 0,1 bis 1,5 m, bevorzugt 0,15 bis 1,3 m, besonders bevorzugt 0,2 bis 1,1 m.

Die Vermessung aller Objekte (Durchmesser des Innenraums, Umfang der Einbauten, gekühlte Oberflächen) kann beispielsweise mittels Laser-Messungen/3D-Scans (z.B. ZEISS COMET L3D 2) ermittelt werden. Üblicherweise sind diese Größen auch den Angaben der Reaktorhersteller zu entnehmen und/oder können anhand von technischen Zeichnungen berechnet werden.

Der Füllgrad $\varphi$ gibt an, wieviel Kontaktmasse im Reaktorinnenraum vorhanden ist. $\varphi$ berechnet sich nach Gleichung 3.

$$\varphi = 10 \cdot \frac{p_{diff}}{\rho_p \cdot g}, \text{ mit} \qquad \text{(Gleichung 3)}$$

$p_{diff}$ = Druckverlust über die Wirbelschicht [kg/m*s$^2$] und
$\rho_p$ = Partikelfeststoffdichte der Kontaktmasse [kg/m$^3$].

Die Partikelfeststoffdichte $\rho_p$ kann näherungsweise als konstant angesehen werden. Ein typischer Wert ist z.B. 2.336 kg/m$^3$ (Dichte Si bei 20°C). Die Messung kann mit einem Pyknometer erfolgen.

Der Druckverlust über die Wirbelschicht $p_{diff}$ beträgt 10.000 bis 200.000 kg/m*s$^2$, bevorzugt 20.000 bis 150.000 kg/m*s$^2$, besonders bevorzugt 50.000 bis 130.000 kg/m*s$^2$. Zur Bestimmung von $p_{diff}$ kann der Druck sowohl in einer Zuleitung des Reaktionsgases als auch in einer Ableitung des Abgases beispielsweise mit einem Manometer gemessen werden. Aus der Differenz ergibt sich $p_{diff}$.

### K2 - Die Beschaffenheit der Kontaktmasse

K2 beschreibt über die Gleichung 4 die Beschaffenheit, insbesondere die Körnung, der eingesetzten partikulären Kontaktmasse.

$K2$ setzt sich aus dem dimensionslosen Reinheitsgrad des Siliciums $R_{Si}$ (0,75 bis 0,99999), der Breite der Partikelgrößenverteilung der Kontaktmasse $B_{AK}$, dem Sauterdurchmesser $d_{32}$ und der relativen Katalysatorverteilung in der Kontaktmasse $\delta_{rel}$ zusammen. $B_{AK}$ ergibt sich aus Gleichung 5.

$$B_{AK} = d_{90} - d_{10}, \text{ wobei} \qquad \text{(Gleichung 5)}$$

$d_{10}$ [pm] ein Maß ist für die Größe der kleineren Partikel und der Wert $d_{90}$ [pm] ein Maß ist für die größeren Partikel in der Fraktion oder Körnungsmischung. $d_{10}$ und $d_{90}$ sind generell wichtige Parameter für die Charakterisierung einer Partikelgrößenverteilung. Der Wert $d_{10}$ bedeutet beispielsweise, dass 10 % aller Partikel kleiner sind als der angegebene Wert. Der Wert von $d_{50}$ ist ferner als mittlere Partikelgröße definiert (vgl. DIN 13320).

Die Werte für $d_{10}$ sowie $d_{90}$ werden bevorzugt so gewählt, dass sich eine Breite der Partikelgrößenverteilung der Kontaktmasse $B_{AK}$ von 10 bis 1.000 $\mu$m, bevorzugt 20 bis 900 $\mu$m, besonders bevorzugt 30 bis 800 $\mu$m, ergibt.

Der Sauterdurchmesser $d_{32}$ entspricht dem mittleren, volumengleichen Partikeldurchmesser der Kontaktmasse und beträgt 5 bis 350 $\mu$m, bevorzugt 10 bis 300 $\mu$m, besonders bevorzugt 10 bis 250 $\mu$m.

Die Bestimmung der Breite der Korngrößenverteilung bzw. des Sauterdurchmessers kann nach ISO 13320 (Laserbeugung) und/oder ISO 13322 (Bildanalyse) erfolgen. Eine Berechnung von mittleren Partikelgrößen/-durchmessern aus Partikelgrößenverteilungen kann nach DIN ISO 9276-2 erfolgen.

Die relative Katalysatorverteilung in der Kontaktmasse $\delta_{rel}$ ist ein Maß für die Benetzung bzw. generelle Benetzbarkeit der partikulären Kontaktmasse mit dem Katalysator. Unter Katalysator sollen insbesondere auch Mischungen verschiedener Katalysatoren und Mischungen von Katalysatoren und Promotoren verstanden werden, die dem Wirbelschichtreaktor zugesetzt werden können. Entsprechend kann $\delta_{rel}$ auch ein Maß für die Benetzung der partikulären Kontaktmasse mit einer Katalysatormischung oder einer Katalysator-Promotormischung sein.

$\delta_{rel}$ kann nach Gleichung 6 berechnet werden.

$$\delta_{rel} = \lambda \cdot \frac{O_{spez,Kat}}{O_{spez,SiK}}, \quad \text{mit} \qquad\qquad \text{(Gleichung 6)}$$

A = Massenverhältnis Katalysator/Silicium-Körnung bzw. Katalysator-Beladung,
$O_{spez,Kat}$ = mittlere spezifische Oberfläche des Katalysators [m$^2$/kg] und
$O_{spez,SiK}$ = mittlere spezifische Oberfläche der Silicium-Körnung [m$^2$/kg] .

Die relative Katalysatorverteilung in der Kontaktmasse beträgt $\delta_{rel}$ 0,001 bis 0,6, bevorzugt 0,015 bis 0,5, besonders bevorzugt 0,003 bis 0,2.

Die mittlere spezifische Oberfläche kann z.B. mittels Gasadsorption nach dem BET-Verfahren bestimmt werden (ISO 9277) .

Unter "Körnung" soll insbesondere eine Mischung aus Siliciumpartikeln verstanden werden, die beispielsweise durch Zerkleinern von stückigem Silicium, insbesondere metallurgischem Silicium ($Si_{mg}$), mittels Brech- und Mahlanlagen hergestellt werden kann. Das stückige Silicium kann eine mittlere Partikelgröße von > 10 mm, bevorzugt > 20 mm, besonders bevorzugt > 50 mm aufweisen. Die maximale mittlere Partikelgröße ist vorzugsweise 500 mm. Körnungen lassen sich im Wesentlichen durch Sieben und/oder Sichten in Fraktionen klassieren.

Körnungen können hergestellt werden durch/aus

- Brechen und Mahlen von stückigem Silicium; anschließend ggf. Sieben und/oder Sichten (Klassieren)
- Abfällen, insbesondere in Form von Stäuben, die bei der Bearbeitung (Brechen, Mahlen, Sägen) verschiedener Siliciumarten (Wafer, poly-/multi-/einkristallines Silicium, $Si_{mg}$) anfallen und ggf. klassiert werden; in Form von Über- und/oder Unterkorn, wobei es sich um Fraktionen handelt, die außerhalb der Zielkörnung liegen,
- Verfahren zur Herstellung von granuliertem $Si_{mg}$ oder Polysilicium und der dabei entstehende Nebenanfall, insbesondere Siliciumstäube (mittlerer Partikeldurchmesser < 10 $\mu$m, ggf. prozessiert (kompaktieren/agglomerieren), bspw. in Form von Pellets).

Eine Mischung verschiedener Körnungen kann als Körnungsmischung und die Körnungen, aus denen die Körnungsmischung besteht, als Körnungsfraktionen bezeichnet werden. Körnungsfraktionen können relativ zueinander in Grobkornfraktionen und Feinkornfraktionen eingeteilt werden. Grundsätzlich ist es bei einer Körnungsmischung möglich, mehr als eine Körnungsfraktion in Grobkornfraktion und/oder Feinkornfraktion einzuteilen. Die Körnung, die in den Wirbelschichtreaktor eingebracht wird, kann als Arbeitskörnung bezeichnet werden. Bei der Kontaktmasse handelt es sich generell um die Körnungsmischung, die im Reaktor mit dem Reaktionsgas in Kontakt kommt.

Bei der Kontaktmasse handelt es sich insbesondere um eine Körnungsmischung. Vorzugsweise umfasst die Kontaktmasse neben Silicium, dem Katalysator und ggf. Promotor keine weiteren Komponenten. Bevorzugt handelt es sich um Silicium, das höchstens 5 Gew.-%, besonders bevorzugt höchstens 2 Gew.-%, insbesondere höchstens 1 Gew.-%, andere Elemente als Verunreinigungen enthält. Vorzugsweise handelt es sich um $Si_{mg}$, das üblicherweise eine Reinheit von 98 bis 99,9 % aufweist. Typisch ist beispielsweise eine Zusammensetzung mit 98 % Silicium, wobei sich die übrigen 2 % in der Regel zum größten Teil aus den folgenden Elementen zusammensetzen: Fe, Ca, Al, Ti, Cu, Mn, Cr, V, Ni, Mg, B, C, P und O. Ferner können folgende Elemente enthalten sein: Co, W, Mo, As, Sb, Bi, S, Se, Te, Zr, Ge, Sn, Pb, Zn, Cd, Sr, Ba, Y und Cl. Die Angabe der Reinheit von Silicium ist demnach so zu verstehen, dass in der zu messenden Siliciumprobe der Gehalt der genannten Elemente bestimmt wird und diese dann in Summe zur Berechnung des Reinheitsgrads (bspw. in Gew.-%) herangezogen werden. Wird ein gesamter Gehalt an Verunreinigungen mit 2 Gew.-% bestimmt, so ergibt sich ein Siliciumgehalt von 98 Gew.-%. Es ist allerdings auch die Verwendung von Silicium einer geringeren Reinheit von 75 bis 98 Gew.-% möglich. Vorzugsweise ist jedoch der Siliciumanteil größer als 85 Gew.-%, besonders bevorzugt größer als 95 Gew.-%.

Bei dem Katalysator kann es sich um ein oder mehrere Elemente aus der Gruppe mit Fe, Cr, Ni, Co, Mn, W, Mo, V, P, As, Sb, Bi, O, S, Se, Te, Ti, Zr, C, Ge, Sn, Pb, Cu, Zn, Cd, Mg, Ca, Sr, Ba, B, Al, Y, Cl handeln. Vorzugsweise ist der Katalysator ausgewählt aus der Gruppe mit Fe, Al, Ca, Ni, Mn, Cu, Zn, Sn, C, V, Ti, Cr, B, P, O, Cl und Mischungen daraus. Die genannten katalytisch aktiven und zum Teil auch promovierenden Elemente können bereits in Silicium als Verunreinigung in einem bestimmten Anteil enthalten sein, beispielsweise in oxidischer oder metallischer Form, als Silicide oder in anderen metallurgischen Phasen, oder als Oxide oder Chloride. Ihr Anteil hängt von der Reinheit des verwendeten Siliciums ab. Es kann allerdings auch durch Vorformierung gezielt Silicium hergestellt werden, das eine Katalysatormischung oder eine Katalysator-Promotor-Mischung enthält.

Der Katalysator kann in metallischer, legierter und/oder salzartiger Form der Kontaktmasse zugesetzt werden. Dabei kann es sich insbesondere um Chloride und/oder Oxide der katalytisch aktiven Elemente handeln. Bevorzugte Verbindungen sind CuCl, $CuCl_2$, CuP, CuO oder Mischungen daraus. Die Kontaktmasse kann ferner Promotoren enthalten, beispielsweise Zn und/oder $ZnCl_2$ und/oder Sn.

Die elementare Zusammensetzung des eingesetzten Siliciums und der Kontaktmasse kann beispielsweise mittels Röntgenfluoreszenzanalyse erfolgen.

Der Katalysator ist bezogen auf Silicium vorzugsweise in einem Anteil von 0,1 bis 20 Gew.-%, besonders bevorzugt von 0,5 bis 15 Gew.-%, insbesondere von 0,8 bis 10 Gew.-%, insbesondere bevorzugt von 1 bis 5 Gew.-%, vorhanden.

## K3 - Reaktionsbedingungen

Die Kennzahl K3 setzt nach Gleichung 7 die wichtigsten Parameter der MRDS miteinander in Beziehung. In ihr enthalten sind die Gasleerrohrgeschwindigkeit $u_L$, der Druckverlust über die Wirbelschicht $p_{diff}$, die kinematische Viskosität des Fluids $v_F$ und die Fluiddichte $\rho_F$. Unter Fluid ist das gasförmige Reaktionsgemisch im Reaktorinnenraum zu verstehen.

Die Gasleerrohrgeschwindigkeit $u_L$ beträgt 0,002 bis 0,4 m/s, bevorzugt 0,005 bis 0,36 m/s, besonders bevorzugt 0,008 bis 0,32 m/s.

Die Fluiddichte $\rho_F$ und die kinematische Viskosität $v_F$ können durch Simulationen von (Phasen-)Gleichgewichtszuständen unter Verwendung einer Software ermittelt werden. Diese Simulationen basieren üblicherweise auf angepassten Zustandsgleichungen, die sich bei variierenden physikalischen Parametern (z.B. $p$ und T) auf real gemessene Zusammensetzungen des Reaktionsgemisches sowohl in der Gas- als auch in der Flüssigphase stützen. Ein solches Simulationsmodell kann anhand realer Betriebszustände/ -parameter validiert werden und ermöglicht die Festlegung von Betriebsoptima hinsichtlich der Parameter $\rho_F$ und $v_F$.

Die Bestimmung von Phasengleichgewichten kann beispielsweise mit einer Messapparatur erfolgen (z.B. modifizierte Umlaufapparatur nach Röck und Sieg, bspw. MKS Baratron Typ 690, MKS Instruments). Dabei werden für ein Stoffgemisch durch Variation von physikalischen Einflussgrößen wie Druck und Temperatur Aggregatszustandsänderungen hervorgerufen. Daraufhin werden die verschiedenen Aggregatzustände analysiert und die Komponentenzusammensetzung bestimmt, beispielsweise mit einem Gaschromatograph. Über rechnergestützte Modellierung können Zustandsgleichungen angepasst werden, um die Phasengleichgewichte zu beschreiben. Die Daten werden in Softwareprogramme übertragen, so dass Phasengleichgewichte berechnet werden können.

Die kinematische Viskosität ist ein Maß für die Impulsübertragung quer zur Strömungsrichtung in einem bewegten Fluid. Dabei kann die kinematische Viskosität $v_F$ über die dynamische Viskosität und die Fluiddichte beschrieben werden. Die Dichte kann für Flüssigkeiten beispielsweise über die Rackett-Gleichung angenähert werden, für Gase kann eine Annäherung über eine Zustandsgleichung, z.B. Peng-Robinson, erfolgen. Die Messung der Dichte kann mit einem digitalen Dichtemessgerät (z.B. DMA 58, Fa. Anton Paar) unter Verwendung der Biegeschwingermethode (Eigenfrequenzmessung) durchgeführt werden.

Die Fluiddichte $\rho_F$ liegt in einem Bereich von 1 bis 5 kg/m$^3$. Die kinematische Viskosität $v_F$ liegt in einem Bereich von $3*10^{-6}$ bis $2,5*10^{-5}$ m$^2$/s.

Der absolute Druck im Wirbelschichtreaktor, bei welchem das erfindungsgemäße Verfahren vorzugsweise durchgeführt wird, beträgt 0,05 bis 1 MPa, besonders bevorzugt 0,08 bis 0,8 MPa, insbesondere 0,1 bis 0,6 MPa.

Das Verfahren wird vorzugsweise in einem Temperaturbereich von 220 bis 400°C, besonders bevorzugt 250 bis 380°C, insbesondere 280 bis 350°C, durchgeführt.

Vorzugsweise enthält das Reaktionsgas vor Eintritt in den Reaktor mindestens 50 Vol.-%, besonders bevorzugt mindestens 70 Vol.-%, insbesondere mindestens 90 Vol.-%, MeCl.

Das Reaktionsgas kann ferner eine oder mehrere Komponenten ausgewählt aus der Gruppe mit Chlorsilane, Methylchlorsilane, HCl, $H_2$, $CH_4$, $C_2H_6$, CO, $CO_2$, $O_2$ und $N_2$ enthalten. Diese Komponenten können beispielsweise als Verunreinigungen in einem recycelten Gas enthalten sein.

Das Reaktionsgas kann ferner ein Trägergas enthalten, beispielsweise Stickstoff oder ein Edelgas wie Argon.

Die Bestimmung der Zusammensetzung des Reaktionsgases erfolgt üblicherweise vor der Zuleitung zum Reaktor über Raman- und Infrarotspektroskopie sowie Gaschromatographie. Dies kann sowohl über stichprobenartig entnommene Proben und anschließende "offline-Analysen" als auch über in das System eingebundene "online"-Analysengeräte erfolgen.

Das Verfahren ist vorzugsweise in einen Verbund zur Herstellung von Polysiloxanen eingebunden. Ferner kann das Verfahren Teil eines Verbunds zu Herstellung von Siliconelastomeren, Siliconölen, funktionellen Siloxanen, Siliconharzen, Siliconharzformulierungen, linearen und cyclischen Polydimethylsiloxanen, Silicaten, organofunktionalisierten Silanen, Chlorsilanen und Polysilicium sein.

**Beispiele:**

Um die gewonnenen Erkenntnisse und Zusammenhänge auf die Produktivität bei der Herstellung von Organochlorsilanen zu übertragen und um die Bereiche für die Kennzahlen K1, K2 und K3 (Arbeitsbereiche) zu definieren, wurden eingehende Untersuchungen an kontinuierlich und diskontinuierlich betriebenen Wirbelschichtreaktoren unterschiedlicher Größe durchgeführt.

Es wurden verschiedene Experimente V durchgeführt (Tabelle 2: V1 bis V15), wobei jeweils der hydraulische Anlagendurchmesser $d_{hyd}$ mit Werten von 0,1 bis 1,5 m, die Gasleerrohrgeschwindigkeit $u_L$, mit Werten von 0,0015 bis 0,5 m/s, der Partikel-Sauterdurchmesser $d_{32}$ mit Werten von 5 pm bis 1.000 $\mu$m, die Breite der Arbeitskörnung $B_{AK}$ mit Werten von 10 bis 1.000 $\mu$m die relative Katalysator-Verteilung über die Kontaktmasse $\delta_{rel}$ mit Werten von 0,0002 bis 3, der Reinheitsgrad des Siliciums mit Werten von 0,75 bis 0,99999, die Katalysator-Beladung A mit Werten von 0,0004 bis 0,6 und der Druckverlust über die Wirbelschicht $p_{diff}$ mit Werten von 10.000 bis 230.000 kg/m*s² variiert wurden.

Die Partikelfeststoffdichte $\rho_P$ kann näherungsweise als konstant angesehen werden, z.B. mit 2.336 kg/m³. Die Fluiddichte $\rho_F$ liegt üblicherweise in einem Bereich von 1 bis 5 kg/m³. Die kinematische Viskosität $\nu_F$ liegt üblicherweise in einem Bereich von $3*10^{-6}$ bis $2,5*10^{-5}$ m²/s.

Aus den gewählten/vorgegebenen Parametern ergaben sich die Kennzahlen K1 (Gleichung 1), K2 (Gleichung 4) und K3 (Gleichung 7). Zur Bewertung der ausgewählten Kombinationen aus K1, K2 und K3 und zur Definition der optimalen Bereiche wurde die Produktivität [kg/(kg*h)], also die produzierte Menge an Organochlorsilanen pro Stunde [kg/h], bezogen auf die im Reaktor eingesetzte Menge an Kontaktmasse (Arbeitskörnung) [kg], zugrunde gelegt. Als optimal bzw. akzeptabel gilt eine Produktivität von > 0,15 kg/(kg*h) bezogen auf die Menge an Organochlorsilan-Produktmischung. V1 bis V15 sind stellvertretend für eine Vielzahl an Experimenten aufgeführt, die zur Ermittlung der optimalen Bereiche durchgeführt wurden. Bei den Experimenten V1, V2, V10, V11 und V15 ist die Produktivität nicht zufriedenstellend. Aus einer Vielzahl derartiger Negativbeispiele wurden die optimalen Bereiche der den Kennzahlen zugrundeliegenden Parameter ermittelt. Daher sind die eingangs im Beispiel genannten Bereiche größer als die beanspruchten Bereiche.

Tabelle 2

| Experiment | K1 | K2 | K3 | Produktivität |
|---|---|---|---|---|
| V1 | 0,93 | 0,0002 | 0,12 | 0,002 |
| V2 | 0,93 | 0,09 | 748,3 | 0,091 |
| V3 | 10,3 | 0,09 | 748,3 | 0,271 |
| V4 | 14,1 | 0,09 | 748,3 | 0,369 |
| V5 | 22,5 | 0,09 | 748,3 | 0,235 |
| V6 | 31,1 | 0,09 | 748,3 | 0,073 |
| V7 | 14,1 | 0,0002 | 748,3 | 0,056 |
| V8 | 14, 1 | 0,003 | 748,3 | 0,217 |
| V9 | 14,1 | 0,09 | 748,3 | 0,357 |
| V10 | 14,1 | 2,5 | 748,3 | 0,148 |
| V11 | 14,1 | 0,09 | 0,12 | 0,142 |
| V12 | 14,1 | 0,09 | 90 | 0,243 |
| V13 | 14,1 | 0,09 | 748 | 0,378 |
| V14 | 14,1 | 0,09 | 2040 | 0,185 |
| V15 | 14,1 | 0,09 | 3129 | 0,133 |

Die Experimente belegen, dass sich mittels MRDS besonders produktiv Organochlorsilane herstellen lassen, wenn das Verfahren in den optimalen Bereichen der Kennzahlen K1, K2 und K3 durchgeführt wird.

**Patentansprüche**

1. Verfahren zur Herstellung von Organochlorsilanen in einem Wirbelschichtreaktor durch Umsetzung von einem Methylchlorid enthaltenden Reaktionsgas mit einer partikulären Kontaktmasse, enthaltend Silicium und einen Katalysator, wobei die Organochlorsilane die allgemeine Formel $(CH_3)_nH_mSiCl_{4-n-m}$ mit n = 1 bis 3 und m = 0 oder 1 aufweisen, **dadurch gekennzeichnet, dass**

   - das Reaktordesign beschrieben ist durch eine Kennzahl,

$$K1 = \varphi \cdot \frac{V_{Reaktor,eff}}{A_{ges,gekühlt} \cdot d_{hyd}} \quad \texttt{mit} \qquad \texttt{(Gleichung 1)}$$

   $\varphi$ = Füllgrad des Reaktors,
   $V_{Reaktor,eff}$ = effektives Reaktorvolumen [m$^3$],
   $A_{ges,gekühlt}$ = Summe gekühlter Oberflächen im Reaktor [m$^2$],
   $d_{hyd}$ = hydraulischer Reaktordurchmesser[m],
   wobei $V_{Reaktor,eff}$ 1,5 bis 2.400 m$^3$ und $d_{hyd}$ 0,1 bis 1,5 m beträgt;

   - die Beschaffenheit der Kontaktmasse beschrieben ist durch eine Kennzahl

$$K2 = R_{Si} \cdot \frac{B_{AK} \cdot \delta_{rel}}{d_{32}}, \quad \texttt{mit} \qquad \texttt{(Gleichung 4)}$$

   $B_{AK}$ = Breite der Partikelgrößenverteilung der Kontaktmasse [pm],
   $d_{32}$ = Partikel-Sauterdurchmesser [pm],
   $R_{Si}$ = Reinheitsgrad des Siliciums,
   $\delta_{rel}$ = relative Katalysatorverteilung in der Kontaktmasse,
   wobei $\delta_{rel}$ 0,001 bis 0,6, $d_{32}$ 5 bis 350 $\mu$m,
   $B_{AK}$ 10 bis 1.000 pm und $R_{Si}$ 0,75 bis 0,99999 beträgt;

   - die Reaktionsbedingungen beschrieben sind durch eine Kennzahl

$$K3 = \frac{u_L}{v_F \cdot 10^6} \cdot \frac{p_{diff}}{g} \cdot \frac{1}{\rho_F}, \quad \texttt{mit} \qquad \texttt{(Gleichung 7)}$$

   $u_L$ = Gasleerrohrgeschwindigkeit [m/s],
   $v_F$ = kinematische Viskosität des Fluids [m$^2$/s],
   $\rho_F$ = Fluiddichte [kg/m$^3$],
   $p_{diff}$ = Druckverlust über die Wirbelschicht [kg/m*s$^2$],
   $g$ = Erdbeschleunigung [m/s$^2$],
   wobei $p_{diff}$ 10.000 bis 200.000 kg/m*s$^2$, $u_L$ 0,002 bis 0,4 m/s, $\rho_F$ 1 bis 5 kg/m$^3$ und $v_F$ 3*10$^{-6}$ bis 2,5*10$^{-5}$ m$^2$/s beträgt;

   und wobei K1 einen Wert von 1 bis 30, K2 einen Wert von 0,0005 bis 2 und K3 einen Wert von 0,2 bis 3.000 aufweist.

2. Verfahren nach Anspruch 1, **dadurch gekennzeichnet, dass** K1 einen Wert von 1,2 bis 25, bevorzugt von 1,5 bis 20, aufweist.

3. Verfahren nach Anspruch 1 oder 2, **dadurch gekennzeichnet, dass** K2 einen Wert von 0,001 bis 1,75, bevorzugt von 0,001 bis 1,2, aufweist.

4. Verfahren nach einem der vorhergehenden Ansprüche, **dadurch gekennzeichnet, dass** K3 einen Wert von 1 bis 2.800, bevorzugt von 10 bis 2.500, aufweist.

5. Verfahren nach einem der vorhergehenden Ansprüche, **dadurch gekennzeichnet, dass** das effektive Reaktorvolumen $V_{Reaktor,eff}$ 5 bis 1.200 m$^3$, bevorzugt 12 bis 810 m$^3$, beträgt.

6. Verfahren nach einem der vorhergehenden Ansprüche, **dadurch gekennzeichnet, dass** der hydraulische Anlagendurchmesser $d_{hyd}$ 0,15 bis 1,3 m, bevorzugt 0,2 bis 1,1 m, beträgt.

7. Verfahren nach einem der vorhergehenden Ansprüche, **dadurch gekennzeichnet, dass** der Druckverlust über die Wirbelschicht $p_{diff}$ 20.000 bis 150.000 kg/m*s$^2$, bevorzugt 50.000 bis 130.000 kg/m*s$^2$, beträgt.

8. Verfahren nach einem der vorhergehenden Ansprüche, **dadurch gekennzeichnet, dass** der Partikel-Sauterdurchmesser $d_{32}$ 10 bis 300 $\mu$m, bevorzugt 10 bis 250 $\mu$m, beträgt.

9. Verfahren nach einem der vorhergehenden Ansprüche, **dadurch gekennzeichnet, dass** die Breite der Partikelgrößenverteilung der Kontaktmasse $B_{AK}$ 20 bis 900 $\mu$m, bevorzugt 30 bis 800 $\mu$m, beträgt.

10. Verfahren nach einem der vorhergehenden Ansprüche, **dadurch gekennzeichnet, dass** die relative Katalysatorverteilung in der Kontaktmasse $\delta_{rel}$ 0,015 bis 0,5, bevorzugt 0,003 bis 0,2, beträgt.

11. Verfahren nach einem der vorhergehenden Ansprüche, **dadurch gekennzeichnet, dass** der Katalysator ausgewählt ist aus der Gruppe mit Fe, Cr, Ni, Co, Mn, W, Mo, V, P, As, Sb, Bi, O, S, Se, Te, Ti, Zr, C, Ge, Sn, Pb, Cu, Zn, Cd, Mg, Ca, Sr, Ba, B, Al, Y, Cl und Mischungen daraus.

12. Verfahren nach einem der vorhergehenden Ansprüche, **dadurch gekennzeichnet, dass** die Kontaktmasse zumindest einen Promotor enthält.

13. Verfahren nach einem der vorhergehenden Ansprüche, **dadurch gekennzeichnet, dass** die Gasleerrohrgeschwindigkeit $u_L$ 0,005 bis 0,36 m/s, bevorzugt 0,008 bis 0,32 m/s, beträgt.

14. Verfahren nach einem der vorhergehenden Ansprüche, **dadurch gekennzeichnet, dass** das Reaktionsgas vor Eintritt in den Reaktor mindestens 50 Vol.-%, bevorzugt mindestens 70 Vol.-%, besonders bevorzugt mindestens 90 Vol.-%, Methylchlorid enthält.

**Claims**

1. Process for producing organochlorosilanes in a fluidized bed reactor by reaction of a methyl chloride-containing reaction gas with a particulate contact mass containing silicon and a catalyst, wherein the organochlorosilanes have the general formula $(CH_3)_nH_mSiCl_{4-n-m}$ where n = 1 to 3 and m = 0 or 1, **characterized in that**

   - the reactor design is described by an index,

$$K1 = \varphi \cdot \frac{V_{reactor,eff}}{A_{tot,cooled} \cdot d_{hyd}} \quad \text{where} \qquad \text{(equation 1)}$$

   $\varphi$ = fill level of the reactor,
   Vreactor, eff = effective reactor volume [m$^3$],
   $A_{tot,\ cooled}$ = sum of cooled surface areas in the reactor [m$^2$],
   $d_{hyd}$ = hydraulic reactor diameter [m],
   wherein $V_{reactor,\ eff}$ is 1.5 to 2400 m$^3$ and $d_{hyd}$ is 0.1 to 1.5 m;

   - the constitution of the contact mass is described by an index

$$K2 = R_{Si} \cdot \frac{B_{AK} \cdot \delta_{rel}}{d_{32}}, \quad \text{where} \qquad \text{(equation 4)}$$

$B_{AK}$ = breadth of the particle size distribution of the contact mass [pm],
$d_{32}$ = particle Sauter diameter [pm],
$R_{Si}$ = purity of the silicon,
$\delta_{rel}$ = relative catalyst distribution in the contact mass,
wherein $\delta_{rel}$ is 0.001 to 0.6, $d_{32}$ is 5 to 350 $\mu$m,
$B_{AK}$ is 10 to 1000 pm and $R_{Si}$ is 0.75 to 0.99999;

- the reaction conditions are described by an index

$$K3 = \frac{u_L}{v_F \cdot 10^6} \cdot \frac{p_{diff}}{g} \cdot \frac{1}{\rho_F}, \qquad \text{where} \qquad \text{(equation 7)}$$

$u_L$ = superficial gas velocity [m/s],
$v_F$ = kinematic viscosity of the fluid [m²/s],
$\rho_F$ = fluid density [kg/m³],
$p_{diff}$ = pressure drop over the fluidized bed [kg/m*s²],
$g$ = acceleration due to gravity [m/s²],
wherein $p_{diff}$ is 10 000 to 200 000 kg/m*s², $u_L$ is 0.002 to 0.4 m/s, $\rho_F$ is 1 to 5 kg/m³ and $v_F$ is $3*10^{-6}$ to $2.5*10^{-5}$ m²/s;

and wherein K1 has a value of 1 to 30, K2 has a value of 0.0005 to 2 and K3 has a value of 0.2 to 3000.

2. Process according to Claim 1, **characterized in that** K1 has a value of 1.2 to 25, preferably of 1.5 to 20.

3. Process according to Claim 1 or 2, **characterized in that** K2 has a value of 0.001 to 1.75, preferably of 0.001 to 1.2.

4. Process according to any of the preceding claims, **characterized in that** K3 has a value of 1 to 2800, preferably of 10 to 2500.

5. Process according to any of the preceding claims, **characterized in that** the effective reactor volume $V_{reactor,\ eff}$ is 5 to 1200 m³, preferably 12 to 810 m³.

6. Process according to any of the preceding claims, **characterized in that** the hydraulic plant diameter $d_{hyd}$ is 0.15 to 1.3 m, preferably 0.2 to 1.1 m.

7. Process according to any of the preceding claims, **characterized in that** the pressure drop over the fluidized bed $p_{diff}$ is 20 000 to 150 000 kg/m*s², preferably 50 000 to 130 000 kg/m*s².

8. Process according to any of the preceding claims, **characterized in that** the particle Sauter diameter $d_{32}$ is 10 to 300 $\mu$m, preferably 10 to 250 pm.

9. Process according to any of the preceding claims, **characterized in that** the breadth of the particle size distribution of the contact mass $B_{AK}$ is 20 to 900 $\mu$m, preferably 30 to 800 pm.

10. Process according to any of the preceding claims, **characterized in that** the relative catalyst distribution in the contact mass $\delta_{rel}$ is 0.015 to 0.5, preferably 0.003 to 0.2.

11. Process according to any of the preceding claims, **characterized in that** the catalyst is selected from the group comprising Fe, Cr, Ni, Co, Mn, W, Mo, V, P, As, Sb, Bi, O, S, Se, Te, Ti, Zr, C, Ge, Sn, Pb, Cu, Zn, Cd, Mg, Ca, Sr, Ba, B, Al, Y, Cl and mixtures thereof.

12. Process according to any of the preceding claims, **characterized in that** the contact mass contains at least one promoter.

13. Process according to any of the preceding claims, **characterized in that** the superficial gas velocity $u_L$ is 0.005 to 0.36 m/s, preferably 0.008 to 0.32 m/s.

**14.** Process according to any of the preceding claims, **characterized in that** the reaction gas contains at least 50 vol%, preferably at least 70 vol%, particularly preferably at least 90 vol%, of methyl chloride before entry into the reactor.

**Revendications**

**1.** Procédé de préparation d'organochlorosilanes dans un réacteur à lit fluidisé par mise en réaction d'un gaz réactionnel contenant du chlorure de méthyle avec une masse de contact particulaire, contenant du silicium et un catalyseur, les organochlorosilanes présentant la formule générale $(CH_3)_nH_mSiCl_{4-n-m}$ avec n = 1 à 3 et m = 0 ou 1, **caractérisé en ce que**

- la conception du réacteur est décrite par un nombre caractéristique,

$$K1 = \varphi \cdot \frac{V_{réacteur,eff}}{A_{tot,refroidie} \cdot d_{hyd}} \qquad \text{avec} \qquad \text{(équation 1)}$$

$\varphi$ = degré de remplissage du réacteur,
$V_{réacteur,eff}$ = volume effectif du réacteur [m³],
$A_{tot,refroidie}$ = somme des surfaces refroidies dans le réacteur [m²] ,
$d_{hyd}$ = diamètre hydraulique du réacteur [m],
$V_{réacteur,eff}$ étant de 1,5 à 2 400 m³ et $d_{hyd}$ étant de 0,1 à 1,5 m ;

- la nature de la masse de contact est décrite par un nombre caractéristique

$$K2 = R_{Si} \cdot \frac{B_{AK} \cdot \delta_{rel}}{d_{32}}, \qquad \text{avec} \qquad \text{(équation 4)}$$

$B_{AK}$ = largeur de la distribution des tailles de particules de la masse de contact [pm],
$d_{32}$ = diamètre de Sauter des particules [pm],
$R_{Si}$ = degré de pureté du silicium,
$\delta_{rel}$ = distribution relative du catalyseur dans la masse de contact,
$\delta_{rel}$ étant de 0,001 à 0,6, $d_{32}$ étant de 5 à 350 $\mu$m, $B_{AK}$ étant de 10 à 1 000 $\mu$m et $R_{Si}$ étant de 0,75 à 0,99999 ;

- les conditions de réaction sont décrites par un nombre caractéristique

$$K3 = \frac{u_L}{v_F \cdot 10^6} \cdot \frac{p_{diff}}{g} \cdot \frac{1}{\rho_F}, \qquad \text{avec} \qquad \text{(équation 7)}$$

$u_L$ = vitesse de gaz en tube vide [m/s],
$v_F$ = viscosité cinématique du fluide [m²/s],
$\rho_F$ = densité du fluide [kg/m³],
$p_{diff}$ = perte de charge à travers le lit fluidisé [kg/m*s²],
$g$ = accélération de la pesanteur [m/s²],
$p_{diff}$ étant de 10 000 à 200 000 kg/m*s², $u_L$ étant de 0,002 à 0,4 m/s, $\rho_F$ étant de 1 à 5 kg/m³ et $v_F$ étant de $3 \cdot 10^{-6}$ à $2,5 \cdot 10^{-5}$ m²/s ;
et K1 présentant une valeur de 1 à 30, K2 présentant une valeur de 0,0005 à 2 et K3 présentant une valeur de 0,2 à 3 000.

**2.** Procédé selon la revendication 1, **caractérisé en ce que** K1 présente une valeur de 1,2 à 25, de préférence de 1,5 à 20.

**3.** Procédé selon la revendication 1 ou 2, **caractérisé en ce que** K2 présente une valeur de 0,001 à 1,75, de préférence de 0,001 à 1,2.

**4.** Procédé selon l'une quelconque des revendications précédentes, **caractérisé en ce que** K3 présente une valeur de 1 à 2 800, de préférence de 10 à 2 500.

**5.** Procédé selon l'une quelconque des revendications précédentes, **caractérisé en ce que** le volume effectif du réacteur $V_{réacteur,eff}$ est de 5 à 1 200 m$^3$, de préférence de 12 à 810 m$^3$.

**6.** Procédé selon l'une quelconque des revendications précédentes, **caractérisé en ce que** le diamètre hydraulique de l'installation $d_{hyd}$ est de 0,15 à 1,3 m, de préférence de 0,2 à 1,1 m.

**7.** Procédé selon l'une quelconque des revendications précédentes, **caractérisé en ce que** la perte de charge à travers le lit fluidisé $p_{diff}$ est de 20 000 à 150 000 kg/m*s$^2$, de préférence de 50 000 à 130 000 kg/m*s$^2$.

**8.** Procédé selon l'une quelconque des revendications précédentes, **caractérisé en ce que** le diamètre de Sauter des particules $d_{32}$ est de 10 à 300 µm, de préférence de 10 à 250 pm.

**9.** Procédé selon l'une quelconque des revendications précédentes, **caractérisé en ce que** la largeur de la distribution des tailles de particules de la masse de contact $B_{AK}$ est de 20 à 900 µm, de préférence de 30 à 800 µm.

**10.** Procédé selon l'une quelconque des revendications précédentes, **caractérisé en ce que** la distribution relative du catalyseur dans la masse de contact $\delta_{rel}$ est de 0,015 à 0,5, de préférence de 0,003 à 0,2.

**11.** Procédé selon l'une quelconque des revendications précédentes, **caractérisé en ce que** le catalyseur est choisi dans le groupe comprenant Fe, Cr, Ni, Co, Mn, W, Mo, V, P, As, Sb, Bi, O, S, Se, Te, Ti, Zr, C, Ge, Sn, Pb, Cu, Zn, Cd, Mg, Ca, Sr, Ba, B, Al, Y, Cl et leurs mélanges.

**12.** Procédé selon l'une quelconque des revendications précédentes, **caractérisé en ce que** la masse de contact contient au moins un promoteur.

**13.** Procédé selon l'une quelconque des revendications précédentes, **caractérisé en ce que** la vitesse de gaz en tube vide $u_L$ est de 0,005 à 0,36 m/s, de préférence de 0,008 à 0,32 m/s.

**14.** Procédé selon l'une quelconque des revendications précédentes, **caractérisé en ce que** le gaz réactionnel contient, avant l'entrée dans le réacteur, au moins 50 % en volume, de préférence au moins 70 % en volume, de manière particulièrement préférée au moins 90 % en volume, de chlorure de méthyle.

Fig. 1

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2017178080 A1

**In der Beschreibung aufgeführte Nicht-Patentliteratur**

- **W.-D. HERGETH.** On-Line Monitoring of Chemical Reactions: Ullmann's Encyclopedia of Industrial Chemistry. Wiley, 2006
- **M. MÜLLER et al.** Advanced Modeling of Mueller-Rochow Synthesis. *Silicon for the chemical and solar industry XIII,* Januar 2016, 157-169
- **F. ZHANG et al.** Effect of Gas Distributor on Hydrodynamics and the Rochow Reaction in a Fluidized Bed Membrane Reactor. *Industrial & Engineering Chemistry Research,* September 2016, vol. 55 (40), 10600-10608
- **N. G. KUZ'MIN et al.** Study of Heat Transfer in a Fluidized Bed of Silicon-Copper Alloy in a Model of an Industrial Reactor for the Synthesis of Organochlorosilanes. Soviet Chemical Industry, Januar 1982, vol. 14, 595-601
- **P. ZHANG et al.** Effect of Bed Characters on the Direct Synthesis of Dimethyldichiorosiiane in Fluidized Bed Reactor. *Scientific Reports,* Marz 2015, vol. 5, 8827
- **P. BANGERT.** Optimization of the Müller-Rochow Synthesis of Silanes - Preprint. *Optimization for Industrial Problems,* Januar 2010, 1-8
- Mueller-Rochow Synthesis: The Direct Process to Methylchlorosilanes. Handbook of Heterogeneous Catalysis, Pt. 12. Inorganic Reactions. Wiley-VCH Verlag GmbH & CO. KGAA, Januar 2008, 2635-2647
- Commercial Production of Silanes by the Direct Synthesis. **B.KANNER ; K.M. LEWIS.** Studies in Organic Chemistry - Catalyzed Direct Reactions of Silicion. Elsevier Science Publishers B.V, 1993, vol. 49, 1-46